# EUROPÄISCHE PATENTSCHRIFT

(11) **EP 2 754 298 B1**
(45) Veröffentlichungstag und Bekanntmachung des Hinweises auf die Patenterteilung: **18.05.2022**
(21) Anmeldenummer: 12778599.6
(22) Anmeldetag: 05.09.2012
(51) Int. Cl.: H04N 13/30, H04N 13/106, H04N 13/117, H04N 13/363, H04N 13/383, H04N 13/388

(54) **AUSWAHL VON OBJEKTEN IN EINEM DREIDIMENSIONALEN VIRTUELLEN SZENARIO**
SELECTION OF OBJECTS IN A THREE-DIMENSIONAL VIRTUAL SCENARIO
SÉLECTION DES OBJETS TRIDIMENSIONNELS DANS UN SCÉNARIO VIRTUEL

(30) Priorität: 08.09.2011 DE 102011112619
(43) Veröffentlichungstag der Anmeldung: 16.07.2014
(73) Patentinhaber: Airbus Defence and Space GmbH, 85521 Ottobrunn (DE)
(72) Erfinder: VOGELMEIER, Leonhard, 85221 Dachau (DE); WITTMANN, David, 80538 München (DE)
(74) Vertreter: LKGLOBAL Lorenz & Kopf PartG mbB Patentanwälte
(86) Internationale Anmeldenummer: PCT/DE2012/000884
(87) Internationale Veröffentlichungsnummer: WO 2013/034131

(56) Entgegenhaltungen:
- EP-A1- 0 493 822
- EP-A1- 1 450 331
- WO-A2-2009/062492
- US-A- 5 015 188
- US-A- 6 052 100
- US-A1- 2003 142 144
- US-A1- 2008 094 398
- US-B1- 6 611 283

## Beschreibung

### Gebiet der Erfindung

Die Erfindung betrifft eine Darstellungsvorrichtung zur Darstellung eines dreidimensionalen virtuellen Szenarios und zur Interaktion mit dem dreidimensionalen virtuellen Szenario, eine Arbeitsplatzvorrichtung zur Darstellung und Bedienung eines dreidimensionalen virtuellen Szenarios, die Verwendung einer Arbeitsplatzvorrichtung zur Darstellung und Überwachung von Lufträumen, als Fluglotsenarbeitsplatz und zur Überwachung und Steuerung von unbemannten Luftfahrzeugen, sowie ein Verfahren zur Auswahl von virtuellen Objekten in einem dreidimensionalen virtuellen Szenario.

### Technischer Hintergrund der Erfindung

Stereoskopische Visualisierungstechniken werden verwendet, um bei einem Betrachter eines stereoskopischen Displays den Eindruck eines dreidimensionalen Szenarios hervorzurufen. Der dreidimensionale Eindruck entsteht bei dem Betrachter dadurch, dass die Augen des Betrachters unterschiedliche Bilder wahrnehmen.

Die Interaktion mit dreidimensionalen virtuellen Objekten in einem dreidimensionalen virtuellen Szenario erfordert die Eingabe von drei translatorischen Freiheitsgraden, da das dreidimensionale Szenario im Vergleich zu einem zweidimensionalen Szenario zusätzlich eine Tiefendimension aufweist. Die Eingabe von drei Freiheitsgraden kann mittels spezieller Interaktionsgeräte und/oder Methoden erforderlich machen, da herkömmliche Interaktionsgeräte, wie eine sog. Computermaus oder ein sog. Trackball, nur zwei translatorische Freiheitsgrade zur Verfügung stellen.

WO 2009/062492 A2 offenbart ein Verfahren zum Darstellen von Bildobjekten in einem virtuellen dreidimensionalen Bildraum.

US 2003/142144 A1 wird als nächstliegender Stand der Technik betrachtet und beschreibt ein System, das eine volumetrische Anzeige und einen benutzersteuerbaren volumetrischen Zeiger innerhalb der volumetrischen Anzeige erzeugt. Der Benutzer kann auf etwas zeigen, indem er einen Strahl anvisiert, eine Vorrichtung in drei Dimensionen in Verbindung mit der Anzeige positioniert, eine digitalisierende Oberfläche des Anzeigegehäuses berührt oder anderweitig Positionskoordinaten eingibt. Der Zeiger kann verschiedene Formen annehmen, einschließlich eines Strahls, eines Punktes, eines Volumens und einer Ebene. Der Benutzer bestimmt eine Eingabeposition und das System ordnet die Eingabeposition einer 3D-Zeigerposition innerhalb der volumetrischen Anzeige zu. Das System bestimmt auch, ob irgendein Objekt durch den Zeiger gekennzeichnet wurde, indem es bestimmt, ob sich das Objekt innerhalb eines Einflussbereichs des Zeigers befindet. Das System führt auch eine Funktion aus, die in Verbindung mit der Kennzeichnung aktiviert wird.

US 2008/094398 A1 beschreibt ein Verfahren und System zur Interaktion mit einem dreidimensionalen Visualisierungssystem unter Verwendung einer zweidimensionalen Schnittstelle.

### Zusammenfassung der Erfindung

Es kann als eine Aufgabe der Erfindung angesehen werden, eine Darstellungsvorrichtung zur Darstellung eines dreidimensionalen virtuellen Szenarios und zur Interaktion mit diesem dreidimensionalen virtuellen Szenario anzugeben, welche eine alternative Interaktionsmöglichkeit mit dem dreidimensionalen virtuellen Szenario anbietet.

Gemäß der Erfindung ist eine Darstellungsvorrichtung mit den Merkmalen des Anspruchs 1 sowie ein Verfahren mit den Merkmalen des Anspruchs 9 angegeben. Weiterbildungen der Erfindung ergeben sich aus den Unteransprüchen und aus der folgenden Beschreibung.

Viele der im Hinblick auf die Darstellungsvorrichtung und die Arbeitsplatzvorrichtung beschriebenen Merkmale lassen sich auch als Verfahrensschritte implementieren und umgekehrt.

Selbstverständlich kann die Darstellungsvorrichtung auch mehr als einen Darstellungsbereich aufweisen, beispielsweise zwei, drei, vier oder eine noch höhere Anzahl von Darstellungsbereichen.

Die Darstellungsbereiche können ein Anzeigeelement sein, welches zur stereoskopischen Visualisierung ausgeführt ist. Bei den Darstellungsbereichen kann es sich damit beispielsweise um Displays oder Projektionsflächen handeln, welche geeignet sind, für eine stereoskopische Visualisierungstechnik genutzt zu werden.

Damit ermöglicht die Darstellungsvorrichtung wie oben und im Folgenden beschrieben eine einfache und schnell zu erlernende Interaktion mit einem dreidimensionalen virtuellen Szenario.

Unter dem Begriff der Interaktion mit einem dreidimensionalen virtuellen Szenario kann insbesondere die Auswahl und die Manipulation von virtuellen Objekten, welche sich in dem dreidimensionalen virtuellen Szenario befinden, verstanden werden.

Die Auswahl eines virtuellen Objektes in dem dreidimensionalen virtuellen Szenario kann dadurch erfolgen, dass eine Verbindungslinie von einem Auge des Bedieners der Darstellungsvorrichtung über das Markierungselement berechnet wird. Die Bewegung des Markierungselementes auf der virtuellen Fläche hat zur Folge, dass die Verbindungslinie ihre Lage verändert. Ebenso wird die Lage der Verbindungslinie auch dann verändert, wenn der Betrachter die Position seiner Augen verändert. Die Auswahl eines virtuellen Objektes in dem dreidimensionalen virtuellen Szenario erfolgt dadurch, dass die Verbindungslinie in das dreidimensionale virtuelle Szenario hinein verlängert wird und ein virtuelles Objekt ausgewählt wird, wenn die Verbindungslinie die virtuellen Koordinaten des virtuellen Ortes des virtuellen Objektes kreuzt.

Insbesondere kann die Auswahl eines virtuellen Objektes erfolgen, indem ein virtuelles Objekt anvisiert wird, d. h. dass das Markierungselement so bewegt wird, dass die Verbindungslinie das virtuelle Objekt kreuzt, und durch Betätigen eines Auswahlelementes an einem Eingabeelement, beispielsweise durch Betätigen einer Taste auf einer sog. Computermaus, die Auswahl des virtuellen Objektes bestätigt wird.

Gemäß einer weiteren Ausführungsform der Erfindung ist die virtuelle Fläche kreisbogenförmig ausgeführt.

In dem virtuellen dreidimensionalen Szenario stellt die virtuelle Fläche damit die räumliche Entsprechung eines Kreisbogens, nämlich einen Hohlzylinderbogen, dar.

Die virtuelle Fläche kann in jeder beliebigen Form ausgestaltet sein, so beispielsweise auch in Form einer Halbkugel oder Kugel.

Das dreidimensionale Szenario kann beispielsweise so projiziert werden, dass der Betrachter von virtuellen Objekten umgeben wird, in anderen Worten, dass der Betrachter sich mitten in dem dreidimensionalen virtuellen Szenario befindet. In diesem Fall kann die virtuelle Fläche als Kugel den Betrachter umgeben und das Markierungselement kann ausgeführt sein, über die Kugeloberfläche bewegt zu werden.

Gemäß einer weiteren Ausführungsform der Erfindung ist die Anordnung der virtuellen Fläche in dem dreidimensionalen virtuellen Szenario veränderbar.

Eine Veränderung der Anordnung der virtuellen Fläche in dem dreidimensionalen virtuellen Szenario ändert nichts daran, dass das Markierungselement nur entlang der virtuellen Fläche bewegt wird. Da die virtuelle Fläche, welche in dem dreidimensionalen virtuellen Szenario liegt, über eine Tiefenkomponente verfügen kann, kann die Veränderung der Anordnung der virtuellen Fläche in dem dreidimensionalen virtuellen Szenario dazu führen, dass das Markierungselement in Bezug zu dem dreidimensionalen virtuellen Szenario eine entsprechend veränderte Bewegung aufweist.

Gemäß einem weiteren Aspekt der Erfindung ist eine Arbeitsplatzvorrichtung zum Darstellen und Bedienen eines dreidimensionalen virtuellen Szenarios mit einer Darstellungsvorrichtung zur Darstellung eines dreidimensionalen virtuellen Szenarios und zur Interaktion mit dem dreidimensionalen virtuellen Szenario wie oben und im Folgenden beschrieben angegeben.

Die Arbeitsplatzvorrichtung kann beispielsweise zur Steuerung von unbemannten Luftfahrzeugen oder aber zur Überwachung von beliebigen Szenarien durch einen oder mehrere Benutzer eingesetzt werden.

Die Arbeitsplatzvorrichtung wie oben und im Folgenden beschrieben kann selbstverständlich über eine Mehrzahl von Darstellungsvorrichtungen verfügen, daneben aber auch eines oder mehrere herkömmliche Displays zur Darstellung zusätzlicher zweidimensional dargestellter Informationen aufweisen.

Weiterhin kann die Arbeitsplatzvorrichtung Eingabeelemente aufweisen, die alternativ oder zusätzlich zu der oben und im Folgenden beschriebenen Interaktion mit dem dreidimensionalen virtuellen Szenario benutzt werden können.

Die Arbeitsplatzvorrichtung kann eine sog. Computermaus, eine Tastatur oder verwendungstypische Interaktionsgeräte, beispielsweise diejenigen eines Fluglotsenarbeitsplatzes, aufweisen.

Ebenso kann es sich bei allen Displays bzw. Darstellungseinheiten um herkömmliche Displays oder um berührungsempfindliche Displays bzw. Darstellungseinheiten (sog. Touchscreens) handeln.

Gemäß einem weiteren Aspekt der Erfindung ist eine Arbeitsplatzvorrichtung wie oben und im Folgenden beschrieben zur Überwachung von Lufträumen angegeben.

Gemäß einem weiteren Aspekt der Erfindung ist die Verwendung einer Arbeitsplatzvorrichtung wie oben und im Folgenden beschrieben als Fluglotsenarbeitsplatz angegeben.

Einem Bediener der Arbeitsplatzvorrichtung ist es damit möglich, mit den dargestellten virtuellen Objekten, d.h. den Flugzeugen in dem zu überwachenden bzw. dargestellten Bereich, einfach zu interagieren, d.h. diese auszuwählen und Anweisungen an die ausgewählten Flugzeuge zu übermitteln.

Gemäß einem weiteren Aspekt der Erfindung ist die Verwendung einer Arbeitsplatzvorrichtung wie oben und im Folgenden beschrieben zur Überwachung und Steuerung von unbemannten Luftfahrzeugen angegeben.

Einem Bediener der Arbeitsplatzvorrichtung ist es damit möglich, mit den dargestellten virtuellen Objekten, d.h. den unbemannten Luftfahrzeugen in dem dargestellten dreidimensionalen virtuellen Szenario, einfach zu interagieren, d.h. diese auszuwählen und Anweisungen an die ausgewählten Luftfahrzeuge zu übermitteln.

Ebenso kann die Arbeitsplatzvorrichtung auch zur Steuerung von Komponenten wie beispielsweise einer Kamera oder sonstiger Sensoren, welche Bestandteil eines unbemannten Luftfahrzeugs sind, verwendet werden.

Gemäß einem weiteren Aspekt der Erfindung ist ein Computerprogrammelement zur Steuerung einer Darstellungsvorrichtung zur Darstellung eines dreidimensionalen virtuellen Szenarios und zur Interaktion mit diesem wie oben und im Folgenden beschrieben angegeben, welches ausgeführt ist, das Verfahren zur Auswahl von virtuellen Objekten in einem dreidimensionalen virtuellen Szenario wie oben und im Folgenden beschrieben durchzuführen, wenn das Computerprogrammelement auf einem Prozessor einer Recheneinheit ausgeführt wird.

Das Computerprogrammelement kann dazu dienen, einen Prozessor einer Recheneinheit anzuleiten, das Verfahren zur Auswahl von virtuellen Objekten in einem dreidimensionalen virtuellen Szenario auszuführen.

Gemäß einem weiteren Aspekt der Erfindung ist ein computerlesbares Medium mit dem Computerprogrammelement wie oben und im Folgenden beschrieben angegeben.

Ein computerlesbares Medium kann dabei jedes flüchtige oder nicht flüchtige Speichermedium sein, beispielsweise eine Festplatte, eine CD, eine DVD, eine Diskette, eine Speicherkarte oder jedes beliebige andere computerlesbare Medium bzw. Speichermedium.

Im Folgenden werden mit Verweis auf die Figuren Ausführungsbeispiele der Erfindung beschrieben.

### Kurze Beschreibung der Figuren

Fig. 1 zeigt eine schematische perspektivische Ansicht einer Darstellungsvorrichtung gemäß einem Ausführungsbeispiel der Erfindung.
Fig. 2 zeigt eine Seitenansicht einer Darstellungsvorrichtung, welche nützlich zum besseren Verständnis der Erfindung ist.
Fig. 3 zeigt eine Seitenansicht einer Darstellungsvorrichtung gemäß einem weiteren Ausführungsbeispiel der Erfindung.
Fig. 4 zeigt eine schematische Ansicht einer Darstellungsvorrichtung gemäß einem Ausführungsbeispiel der Erfindung.
Fig. 5 zeigt eine Seitenansicht einer Arbeitsplatzvorrichtung gemäß einem Ausführungsbeispiel der Erfindung.
Fig. 6 zeigt eine schematische Ansicht eines Verfahrens gemäß einem Ausführungsbeispiel der Erfindung.
Fig. 7 zeigt eine schematische Ansicht eines computerlesbaren Mediums gemäß einem Ausführungsbeispiel der Erfindung.

### Detaillierte Beschreibung von Ausführungsbeispielen

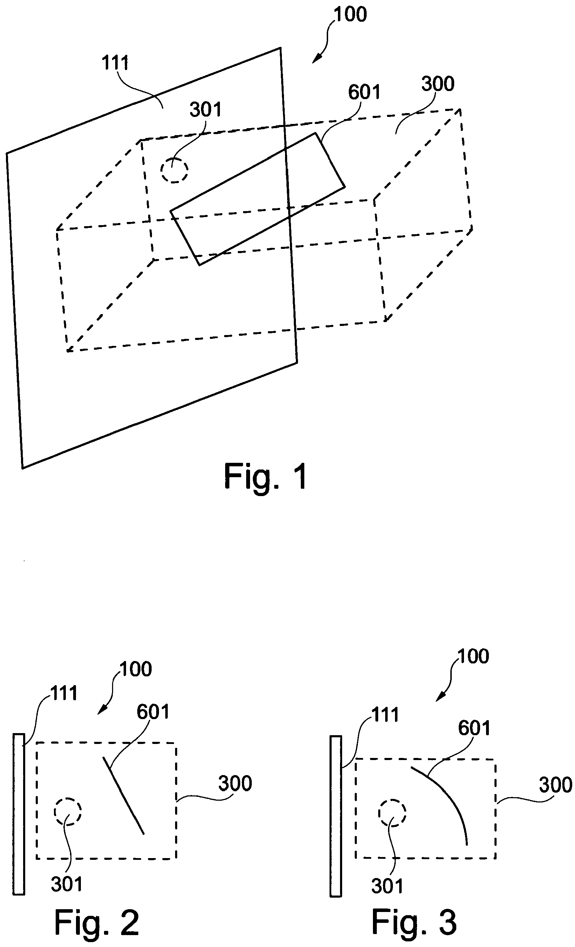

Fig. 1 zeigt eine Darstellungsvorrichtung 100 zur Darstellung eines dreidimensionalen virtuellen Szenarios 300 mit einem Darstellungsbereich 111. In dem dreidimensionalen virtuellen Szenario 300 befindet sich ein virtuelles Objekt 301 sowie eine virtuelle Fläche 601.

Die virtuelle Fläche 601 ist ausgeführt, dass ein Markierungselement auf ihr entlang bewegt werden kann. Damit kann sich das Markierungselement in zwei Richtungen innerhalb des dreidimensionalen virtuellen Szenarios 300 bewegen.

Fig. 2 zeigt eine Seitenansicht der Darstellungsvorrichtung 100 mit einem Darstellungsbereich 111 zur Darstellung eines dreidimensionalen virtuellen Szenarios 300.

In dem dreidimensionalen virtuellen Szenario befindet sich die virtuelle Fläche 601 und das virtuelle Objekt 301.

Die virtuelle Fläche 601 kann dabei in dem dreidimensionalen virtuellen Szenario beliebig angeordnet sein. D. h. dass beispielsweise eine Neigung und eine Position der virtuellen Fläche angepasst werden kann.

Wird die Position der virtuellen Fläche 601 verändert, so kann dies dazu führen, dass der virtuelle Ort eines virtuellen Objektes 301 sich in Bezug auf die virtuelle Fläche 601 verändert. In Fig. 2 ist die virtuelle Fläche 601 so angeordnet, dass das virtuelle Objekt 301 sich zwischen dem Darstellungsbereich 111 und der virtuellen Fläche 601 befindet.

Die virtuelle Fläche 601 kann aber auch so angeordnet sein, dass diese sich zwischen einem oder mehreren virtuellen Objekten 301 und dem Darstellungsbereich 111 befindet.

An dem Verfahren zur Auswahl eines virtuellen Objektes ändert die Position der virtuellen Fläche in dem dreidimensionalen virtuellen Szenario prinzipiell nichts.

Befindet sich ein auszuwählendes virtuelles Objekt zwischen der virtuellen Fläche und dem Auge des Betrachters, so wird das virtuelle Objekt dadurch ausgewählt, dass die Verbindungslinie vom Auge zum Markierungselement durch die virtuellen Koordinaten des Ortes des virtuellen Objektes verläuft.

Befindet sich das auszuwählende virtuelle Objekt zwischen der virtuellen Fläche und der Darstellungseinheit, wird das virtuelle Objekt dadurch ausgewählt, dass die Verbindungslinie in das dreidimensionale virtuelle Szenario verlängert wird und dort durch die Koordinaten des Ortes des virtuellen Objektes verläuft.

Fig. 3 zeigt eine Darstellungsvorrichtung 100 mit einem Darstellungsbereich 111 für eine dreidimensionale virtuelle Szene 300, wobei in der dreidimensionalen virtuellen Szene ein virtuelles Objekt 301 und eine virtuelle Fläche 601 dargestellt sind.

Die virtuelle Fläche ist kreisbogenförmig bzw. in der räumlichen Entsprechung hohlzylinderbogenförmig ausgeführt. Ein Markierungselement kann sich dabei entlang der Oberfläche der virtuellen Fläche bewegen.

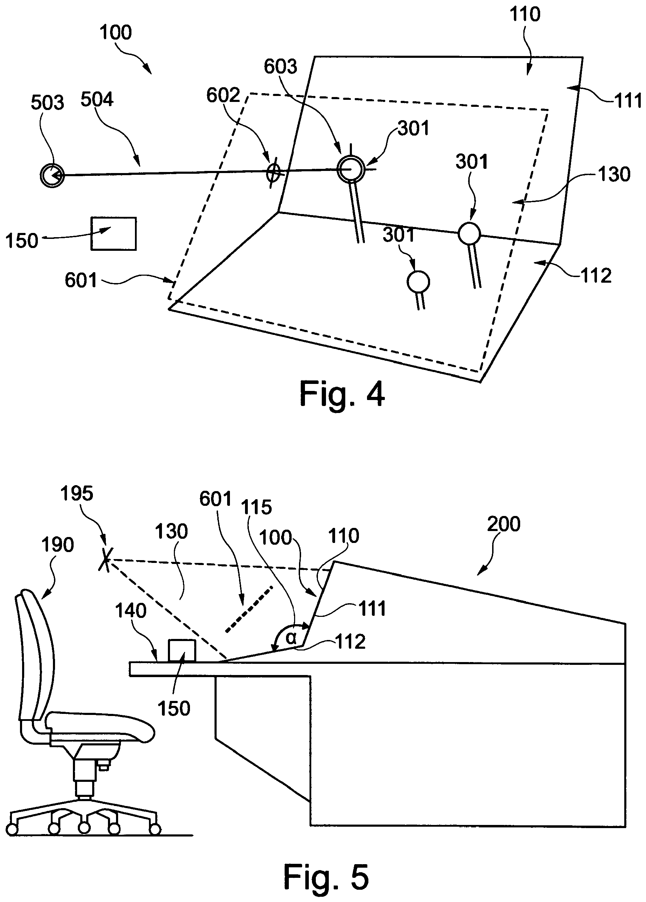

Fig. 4 zeigt eine Darstellungsvorrichtung 100 für ein dreidimensionales virtuelles Szenario mit einer Darstellungseinheit 110 mit einem ersten Darstellungsbereich 111 und einem zweiten Darstellungsbereich 112. In dem Darstellungsraum 130 werden virtuelle dreidimensionale Objekte 301 abgebildet.

In der dreidimensionalen virtuellen Szene ist eine virtuelle Fläche 601 angeordnet, auf der ein Markierungselement 602 bewegt werden kann. Das Markierungselement 602 bewegt sich alleine auf der virtuellen Fläche 601, womit das Markierungselement 602 in seiner Bewegung zwei translatorische Freiheitsgrade aufweist. In anderen Worten ist das Markierungselement 602 ausgeführt, eine zweidimensionale Bewegung auszuführen. Damit kann das Markierungselement beispielsweise mittels einer herkömmlichen Computermaus gesteuert werden.

Die Auswahl eines virtuellen Objektes in dem dreidimensionalen Szenario erfolgt dadurch, dass die Position wenigstens eines Auges 503 erfasst wird und eine Verbindungslinie 504 von der ermittelten Position des Auges 503 über das Markierungselement 602 in das virtuelle dreidimensionale Szenario in dem Darstellungsraum 130 berechnet wird.

Die Erfassung der Augenposition kann beispielsweise dadurch erfolgen, dass der Benutzer eine Brille mit Reflektoren aufsetzt und ein Kamerasystem die Position der Reflektoren erfasst. Es können aber auch andere Verfahren für die Erfassung der Augenposition genutzt werden.

Die Verbindungslinie kann selbstverständlich auch ausgehend von einer gemittelten Position beider Augen des Betrachters aus berechnet werden. Daneben kann die Position der Augen des Benutzers mit oder ohne Brille mit entsprechenden Reflektoren ermittelt werden. Es sei darauf hingewiesen, dass im Zusammenhang mit der Erfindung jegliche Mechanismen und Verfahren zur Ermittlung der Position der Augen genutzt werden können.

Die Auswahl eines virtuellen Objektes 301 in dem dreidimensionalen Szenario erfolgt dadurch, dass die Verbindungslinie 504 in den Darstellungsraum 130 verlängert wird und dasjenige virtuelle Objekt ausgewählt wird, dessen virtuelle Koordinaten von der Verbindungslinie 504 gekreuzt werden. Die Auswahl eines virtuellen Objektes 301 wird dann beispielsweise mittels eines Auswahlanzeigers 603 gekennzeichnet.

Selbstverständlich kann die virtuelle Fläche 601, auf der sich das Markierungselement 602 bewegt, auch so in dem virtuellen Szenario im Darstellungsraum 130 angeordnet sein, dass sich aus Sicht des Benutzers virtuelle Objekte 301 vor und/oder hinter der virtuellen Fläche 601 befinden.

Sobald das Markierungselement 602 auf der virtuellen Fläche 601 so bewegt wird, dass die Verbindungslinie 504 die Koordinaten eines virtuellen Objektes 301 kreuzt, kann das Markierungselement 602 im dreidimensionalen Szenario so dargestellt werden, dass es mit einer zusätzlichen Tiefeninformation bzw. einer Veränderung der Tiefeninformation die virtuellen dreidimensionalen Koordinaten des ausgewählten Objektes einnimmt. Aus Sicht des Benutzers stellt sich diese Veränderung dann so dar, dass das Markierungselement 602, sobald ein virtuelles Objekt 301 ausgewählt wird, eine räumliche Bewegung hin auf den Benutzer oder weg von dem Benutzer macht.

Dies ermöglicht die Interaktion mit virtuellen Objekten in dreidimensionalen Szenarien mittels einfach zu handhabenden zweidimensionalen Interaktionsgeräten, wie beispielsweise einer Computermaus, d.h. mittels Interaktionsgeräten, die zwei translatorische Freiheitsgrade aufweisen. Dies kann im Gegensatz zu speziellen dreidimensionalen Interaktionsgeräten mit drei Freiheitsgraden eine einfachere und schneller zu lernende Interaktion mit einem dreidimensionalen Szenario darstellen, da ein Eingabegerät mit weniger Freiheitsgraden für die Interaktion genutzt wird.

Selbstverständlich können virtuelle Objekte in dem dreidimensionalen Szenario auch so dargestellt werden, dass die Koordinaten der Objekte in dem virtuellen Szenario so erscheinen, als ob sich die virtuellen Objekte aus Sicht des Benutzers hinter der Visualisierungsoberfläche der Darstellungsvorrichtung befinden.

Fig. 5 zeigt eine Arbeitsplatzvorrichtung 200 zur Darstellung eines dreidimensionalen virtuellen Szenarios und zur Interaktion mit dem virtuellen Szenario.

Die Arbeitsplatzvorrichtung 200 weist eine Darstellungsvorrichtung 100 mit einer Darstellungseinheit 110 auf.

Die Darstellungseinheit 110 weist einen ersten Darstellungsbereich 111 und einen zweiten Darstellungsbereich 112 auf, wobei der zweite Darstellungsbereich relativ zum ersten Darstellungsbereich in Richtung des Benutzers so abgewinkelt ist, dass die beiden Darstellungsbereiche einen Einschlusswinkel α 115 aufzeigen.

Der erste Darstellungsbereich 111 der Darstellungseinheit 110 und der zweite Darstellungsbereich 112 der Darstellungseinheit 110 spannen durch ihre zueinander abgewinkelte Lage mit einer Betrachterposition 195, d. h. der Augenposition des Betrachters, einen Darstellungsraum 130 für das dreidimensionale virtuelle Szenario auf.

Bei dem Darstellungsraum 130 handelt es sich damit um dasjenige Raumvolumen, in dem die sichtbare dreidimensionale virtuelle Szene dargestellt wird.

Ein Bediener, welcher die Sitzgelegenheit 190 während der Benutzung der Arbeitsplatzvorrichtung 200 nutzt, kann neben dem Darstellungsraum 130 für das dreidimensionale virtuelle Szenario auch den Arbeitsplatzbereich 140 nutzen, auf dem sich weitere berührungsempfindliche oder herkömmliche Displays befinden können.

Der Einschlusswinkel α 115 kann dabei derart bemessen sein, dass sämtliche virtuellen Objekte im Darstellungsraum 130 innerhalb einer Armreichweite des Benutzers der Arbeitsplatzvorrichtung 200 liegen. Insbesondere bei einem Einschlusswinkel a, welcher zwischen 90 Grad und 150 Grad liegt, ergibt sich eine gute Anpassung an die Armreichweite des Benutzers. Der Einschlusswinkel α kann beispielsweise auch an die individuellen Bedürfnisse eines einzelnen Benutzers angepasst werden und dabei den Bereich von 90 Grad bis 150 Grad sowohl unter- als auch überschreiten. In einem Ausführungsbeispiel beträgt der Einschlusswinkel α 120 Grad.

Bei der Luftraumüberwachung kann das dreidimensionale virtuelle Szenario beispielsweise so dargestellt werden, dass der zweite Darstellungsbereich 112 der Darstellungseinheit 110 der virtuell dargestellten Erdoberfläche oder einer Referenzfläche im Raum entspricht.

Damit eignet sich die erfindungsgemäße Arbeitsplatzvorrichtung insbesondere für die längerfristige, ermüdungsarme Bearbeitung von dreidimensionalen virtuellen Szenarien mit integrierter räumlicher Darstellung geografisch referenzierter Daten, wie z. B. Luftfahrzeugen, Wegpunkten, Kontrollzonen, Bedrohungsräumen, Geländetopografien und Wettergeschehen, mit einfachen intuitiven Interaktionsmöglichkeiten.

Die Arbeitsplatzvorrichtung wie oben und im Folgenden beschrieben ermöglicht damit ein großes stereoskopisches Darstellungsvolumen bzw. einen Darstellungsraum. Weiterhin ermöglicht es die Arbeitsplatzvorrichtung, dass eine virtuelle Referenzfläche in dem virtuellen dreidimensionalen Szenario, beispielsweise eine Geländeoberfläche, in derselben Ebene positioniert wird wie die real vorhandene Darstellungseinheit bzw. Berührungseinheit.

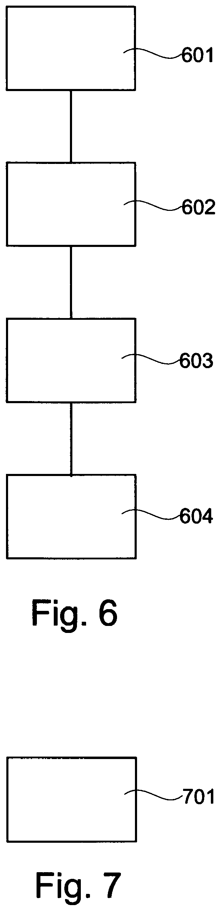

Fig. 6 zeigt eine schematische Ansicht eines Verfahrens zur Auswahl von virtuellen Objekten in einem dreidimensionalen virtuellen Szenario aufweisend die Schritte: Abbilden eines Markierungselementes in einem dreidimensionalen virtuellen Szenario 601, Bewegen des Markierungselementes mit zwei Freiheitsgraden entlang einer virtuellen Fläche 602, Ermitteln einer Verbindungslinie von einem Auge des Betrachters zu dem Markierungselement 603 und Auswählen eines virtuellen Objektes in dem dreidimensionalen virtuellen Szenario durch Positionieren des Markierungselementes in einem bestimmten Bereich auf der virtuellen Fläche 604.

Das Auswählen des Objektes kann dadurch erfolgen, dass das Markierungselement so auf der virtuellen Fläche bewegt wird, dass die Verbindungslinie von dem Auge des Betrachters zu dem Markierungselement einen virtuellen Ort des auszuwählenden virtuellen Objektes in dem dreidimensionalen virtuellen Szenario kreuzt.

Fig. 7 zeigt ein computerlesbares Medium 701 mit einem Computerprogrammelement zur Steuerung einer Darstellungsvorrichtung wie oben und im Folgenden beschrieben, welches ausgeführt ist, das Verfahren zur Auswahl von virtuellen Objekten in einem dreidimensionalen virtuellen Szenario durchzuführen, wenn das Computerprogrammelement auf einem Prozessor einer Maschine ausgeführt wird.

## Patentansprüche

1. Darstellungsvorrichtung (100) zur Darstellung eines dreidimensionalen virtuellen Szenarios (300) und zur Interaktion mit diesem, aufweisend:
wenigstens einen Darstellungsbereich (111) zur Darstellung des dreidimensionalen virtuellen Szenarios;
eine Eingabeeinheit (150) zur Steuerung einer Bewegung eines Markierungselementes (602) auf einer virtuellen Fläche (601) in dem dreidimensionalen virtuellen Szenario;
wobei die Darstellungsvorrichtung (100) ausgeführt ist, virtuelle Objekte in einem Darstellungsraum (130) anzuzeigen, so dass sich die virtuellen Objekte aus Sicht eines Betrachters vor und/oder hinter der virtuellen Fläche (601) befinden;
wobei die Darstellungsvorrichtung (100) ausgeführt ist, die virtuelle Fläche (601) in dem Darstellungsraum (130) darzustellen, so dass das Markierungselement (602) auf der virtuellen Fläche (601) bewegt werden kann, um ein virtuelles Objekt (301) in dem dreidimensionalen virtuellen Szenario auszuwählen;
wobei die Darstellungsvorrichtung (100) ausgeführt ist, eine Verbindungslinie (504) von dem Betrachter der Darstellungsvorrichtung (100) über das Markierungselement (602) zu berechnen; wobei die Darstellungsvorrichtung (100) ausgeführt ist, das virtuelle Objekt (301) dadurch auszuwählen, dass das Markierungselement (602) so auf der virtuellen Fläche bewegt wird, dass die Verbindungslinie (504) einen virtuellen Ort des virtuellen Objekts in dem dreidimensionalen virtuellen Szenario kreuzt; **dadurch gekennzeichnet, dass**:
die Darstellungsvorrichtung (100) ausgeführt ist, die Verbindungslinie (504) von einer gemittelten Position der Augen des Betrachters der Darstellungsvorrichtung (100) über das Markierungselement (602) zu berechnen;
wobei die Darstellungsvorrichtung (100) ausgeführt ist, das Markierungselement (602) im dreidimensionalen virtuellen Szenario so darzustellen, dass es mit einer zusätzlichen Tiefeninformation den virtuellen Ort des virtuellen Objekts einnimmt, wenn die Verbindungslinie (504) den virtuellen Ort des virtuellen Objekts kreuzt, wobei die virtuelle Fläche eine abgerundete Form aufweist.

2. Darstellungsvorrichtung nach Anspruch 1,
wobei die virtuelle Fläche als Ebene ausgeführt ist.

3. Darstellungsvorrichtung nach Anspruch 1,
wobei die virtuelle Fläche kreisbogenförmig ausgeführt ist.

4. Darstellungsvorrichtung nach einem der Ansprüche 1 bis 3,
wobei die Anordnung der virtuellen Fläche in dem dreidimensionalen virtuellen Szenario veränderbar ist.

5. Arbeitsplatzvorrichtung zur Darstellung und Bedienung eines dreidimensionalen virtuellen Szenarios mit einer Darstellungsvorrichtung nach einem der Ansprüche 1 bis 4.

6. Verwendung einer Arbeitsplatzvorrichtung nach Anspruch 5 für die Darstellung und Überwachung von Lufträumen.

7. Verwendung einer Arbeitsplatzvorrichtung nach Anspruch 5 als Fluglotsenarbeitsplatz.

8. Verwendung einer Arbeitsplatzvorrichtung nach Anspruch 5 zur Überwachung und Steuerung von unbemannten Luftfahrzeugen.

9. Verfahren zur Auswahl von virtuellen Objekten in einem dreidimensionalen virtuellen Szenario, aufweisend die Schritte:
Abbilden eines Markierungselementes in dem dreidimensionalen virtuellen Szenario;
Bewegen des Markierungselementes entlang einer virtuellen Fläche;
Ermitteln einer Verbindungslinie von dem Betrachter zu dem Markierungselement;
Auswählen eines virtuellen Objektes in dem dreidimensionalen virtuellen Szenario durch Positionierung des Markierungselementes in einem bestimmten Bereich auf der virtuellen Fläche;
wobei das Auswählen des Objektes dadurch erfolgt, dass das Markierungselement so auf der virtuellen Fläche bewegt wird, dass die Verbindungslinie einen virtuellen Ort des virtuellen Objektes in dem dreidimensionalen virtuellen Szenario kreuzt;
wobei das virtuelle Objekt (301) dadurch ausgewählt wird, dass das Markierungselement (602) so auf der virtuellen Fläche bewegt wird, dass die Verbindungslinie (504) einen virtuellen Ort des virtuellen Objekts in dem dreidimensionalen virtuellen Szenario kreuzt;
**dadurch gekennzeichnet, dass**:
das Ermitteln der Verbindungslinie von einer gemittelten Position der Augen des Betrachters zu dem Markierungselement erfolgt;
wobei das Markierungselement (602) im dreidimensionalen virtuellen Szenario so dargestellt wird, dass es mit einer zusätzlichen Tiefeninformation den virtuellen Ort des virtuellen Objekts einnimmt, wenn die Verbindungslinie (504) den virtuellen Ort des virtuellen Objekts kreuzt, wobei die virtuelle Fläche eine abgerundete Form aufweist.

10. Computerprogrammelement zur Steuerung einer Darstellungsvorrichtung nach einem der Ansprüche 1 bis 4, welches ausgeführt ist, das Verfahren nach Anspruch 9 durchzuführen, wenn es auf einem Prozessor einer Recheneinheit ausgeführt wird.

11. Computerlesbares Medium, auf dem ein Computerprogrammelement nach Anspruch 10 gespeichert ist.

## Claims

1. Representation device (100) for representing a three-dimensional virtual scenario (300) and for interacting therewith, comprising:
at least one representation region (111) for representing the three-dimensional virtual scenario;
an input unit (150) for controlling a movement of a marking element (602) on a virtual surface area (601) in the three-dimensional virtual scenario;
wherein the representation device (100) is embodied to display virtual objects in a representation space (130), such that the virtual objects are situated in front of and/or behind the virtual surface area (601) from the viewpoint of an observer;
wherein the representation device (100) is embodied to represent the virtual surface area (601) in the representation space (130), such that the marking element (602) can be moved on the virtual surface area (601) in order to select a virtual object (301) in the three-dimensional virtual scenario;
wherein the representation device (100) is embodied to calculate a connecting line (504) from the observer of the representation device (100) via the marking element (602); wherein the representation device (100) is embodied to select the virtual object (301) by the marking element (602) being moved on the virtual surface area so that the connecting line (504) intersects a virtual location of the virtual object in the three-dimensional virtual scenario; **characterized in that**:
the representation device (100) is embodied to calculate the connecting line (504) from an averaged position of the eyes of the observer of the representation device (100) via the marking element (602) ;
wherein the representation device (100) is embodied to represent the marking element (602) in the three-dimensional virtual scenario so that with additional depth information said marking element occupies the virtual location of the virtual object if the connecting line (504) intersects the virtual location of the virtual object, wherein the virtual surface area has a rounded shape.

2. Representation device according to Claim 1,
wherein the virtual surface area is embodied as a plane.

3. Representation device according to Claim 1,
wherein the virtual surface area is embodied in the shape of a circular arc.

4. Representation device according to any of Claims 1 to 3,
wherein the arrangement of the virtual surface area in the three-dimensional virtual scenario is variable.

5. Workstation device for representing and operating a three-dimensional virtual scenario with a representation device according to any of Claims 1 to 4.

6. Use of a workstation device according to Claim 5 for representing and monitoring airspaces.

7. Use of a workstation device according to Claim 5 as an air traffic control workstation.

8. Use of a workstation device according to Claim 5 for monitoring and controlling unmanned aircraft.

9. Method for selecting virtual objects in a three-dimensional virtual scenario, comprising the following steps:
reproducing a marking element in the three-dimensional virtual scenario;
moving the marking element along a virtual surface area;
determining a connecting line from the observer to the marking element;
selecting a virtual object in the three-dimensional virtual scenario by positioning the marking element in a specific region on the virtual surface area;
wherein selecting the object is effected by the marking element being moved on the virtual surface area so that the connecting line intersects a virtual location of the virtual object in the three-dimensional virtual scenario;
wherein the virtual object (301) is selected by the marking element (602) being moved on the virtual surface area so that the connecting line (504) intersects a virtual location of the virtual object in the three-dimensional virtual scenario;
**characterized in that**:
determining the connecting line from an averaged position of the eyes of the observer to the marking element is effected;
wherein the marking element (602) is represented in the three-dimensional virtual scenario so that with additional depth information said marking element occupies the virtual location of the virtual object if the connecting line (504) intersects the virtual location of the virtual object, wherein the virtual surface area has a rounded shape.

10. Computer program element for controlling a representation device according to any of Claims 1 to 4, which is embodied to carry out the method according to Claim 9 when it is executed on a processor of a computing unit.

11. Computer-readable medium on which a computer program element according to Claim 10 is stored.

## Revendications

1. Dispositif de présentation (100) destiné à présenter un scénario virtuel tridimensionnel (300) et à interagir avec lui, ledit dispositif de présentation comportant :
au moins une zone de présentation (111) destinée à présenter le scénario virtuel tridimensionnel ;
une unité d'entrée (150) destinée à commander un mouvement d'un élément de marquage (602) sur une surface virtuelle (601) dans le scénario virtuel tridimensionnel ;
le dispositif de présentation (100) étant conçu pour afficher des objets virtuels dans un espace de présentation (130) de sorte que les objets virtuels sont situés devant et/ou derrière la surface virtuelle (601) du point de vue d'un observateur ;
le dispositif de présentation (100) étant conçu pour présenter la surface virtuelle (601) dans l'espace de présentation (130) de sorte que l'élément de marquage (602) puisse être déplacé sur la surface virtuelle (601) pour sélectionner un objet virtuel (301) dans le scénario virtuel tridimensionnel ;
le dispositif de présentation (100) étant conçu pour calculer une ligne de liaison (504) partant de l'observateur du dispositif de présentation (100) et passant par l'élément de marquage (602) ; le dispositif de présentation (100) étant conçu pour sélectionner l'objet virtuel (301) en déplaçant l'élément de marquage (602) sur la surface virtuelle de sorte que la ligne de liaison (504) croise un emplacement virtuel de l'objet virtuel dans le scénario virtuel tridimensionnel ; **caractérisé en ce que** :
le dispositif de présentation (100) est agencé pour calculer la ligne de liaison (504) partant d'une position moyenne des yeux de l'observateur du dispositif de présentation (100) et passant par l'élément de marquage (602) ;
le dispositif de présentation (100) étant conçu pour présenter l'élément de marquage (602) dans le scénario virtuel tridimensionnel de sorte qu'il occupe l'emplacement virtuel de l'objet virtuel avec une information de profondeur supplémentaire lorsque la ligne de liaison (504) croise l'emplacement virtuel de l'objet virtuel, la surface virtuelle ayant une forme arrondie.

2. Dispositif de présentation selon la revendication 1, la surface virtuelle étant conçue comme un plan.

3. Dispositif de présentation selon la revendication 1, la surface virtuelle étant conçue en arc de cercle.

4. Dispositif de présentation selon l'une des revendications 1 à 3, l'agencement de la surface virtuelle dans le scénario virtuel tridimensionnel pouvant être modifié.

5. Dispositif de poste de travail destiné à présenter et exploiter un scénario virtuel tridimensionnel avec un dispositif de présentation selon l'une des revendications 1 à 4.

6. Utilisation d'un dispositif de poste de travail selon la revendication 5 pour présenter et surveiller des espaces aériens.

7. Utilisation d'un dispositif de poste de travail selon la revendication 5 comme poste de travail d'un contrôleur aérien.

8. Utilisation d'un dispositif de poste de travail selon la revendication 5 pour surveiller et commander des aéronefs sans pilote.

9. Procédé de sélection d'objets virtuels dans un scénario virtuel tridimensionnel, ledit procédé comprenant les étapes suivantes :
reproduire un élément de marquage dans le scénario virtuel tridimensionnel ;
déplacer l'élément de marquage le long d'une surface virtuelle ;
déterminer une ligne de liaison entre l'observateur et l'élément de marquage ;
sélectionner un objet virtuel dans le scénario virtuel tridimensionnel par positionnement de l'élément de marquage dans une zone déterminée sur la surface virtuelle ;
la sélection de l'objet étant effectuée en ce que l'élément de marquage est déplacé sur la surface virtuelle de sorte que la ligne de liaison croise un emplacement virtuel de l'objet virtuel dans le scénario virtuel tridimensionnel ;
l'objet virtuel (301) étant sélectionné en déplaçant l'élément de marquage (602) sur la surface virtuelle de sorte que la ligne de liaison (504) croise un emplacement virtuel de l'objet virtuel dans le scénario virtuel tridimensionnel ;
**caractérisé en ce que** :
la détermination de la ligne de liaison est effectuée à partir d'une position moyenne des yeux de l'observateur par rapport à l'élément de marquage ;
l'élément de marquage (602) étant présenté dans le scénario virtuel tridimensionnel de sorte qu'il occupe l'emplacement virtuel de l'objet virtuel avec une information de profondeur supplémentaire lorsque la ligne de liaison (504) croise l'emplacement virtuel de l'objet virtuel, la surface virtuelle ayant une forme arrondie.

10. Élément de programme informatique destiné à commander un dispositif de présentation selon l'une des revendications 1 à 4, lequel élément de programme informatique est conçu pour mettre en œuvre le procédé selon la revendication 9 lorsqu'il est exécuté sur un processeur d'une unité de calcul.

11. Support lisible par ordinateur sur lequel est stocké un élément de programme informatique selon la revendication 10.
